# FASCICULE DE BREVET EUROPEEN

(11) **EP 4 028 656 B1**
(45) Date de publication et mention de la délivrance du brevet: **30.07.2025**
(21) Numéro de dépôt: 20786017.2
(22) Date de dépôt: 07.09.2020
(51) Int. Cl.: F02C 7/045, F02K 1/82, G10K 11/168

(54) **PANNEAU STRUCTURAL ET/OU ACOUSTIQUE COMPRENANT UNE BRIDE DE FERMETURE EN U ORIENTEE VERS L'INTERIEUR DU PANNEAU, ET PROCEDE DE FABRICATION D'UN TEL PANNEAU**
STRUKTURELLE UND/ODER AKUSTISCHE PLATTE MIT EINEM ZUR INNENSEITE DER PLATTE GERICHTETEN U-FÖRMIGEN DICHTUNGSFLANSCH UND VERFAHREN ZUR HERSTELLUNG EINER SOLCHEN PLATTE
STRUCTURAL AND/OR ACOUSTIC PANEL COMPRISING A U-SHAPED SEALING FLANGE DIRECTED TOWARD THE INSIDE OF THE PANEL, AND METHOD FOR MANUFACTURING SUCH A PANEL

(30) Priorité: 09.09.2019 FR 1909906
(43) Date de publication de la demande: 20.07.2022
(73) Titulaire: Safran Nacelles, 76700 Gonfreville-l'Orcher (FR)
(72) Inventeur: MIOSSEC, Tony, 77550 MOISSY-CRAMAYEL (FR); BIENVENU, Philippe, 77550 MOISSY-CRAMAYEL (FR); BEMONT, Emilie, 77550 MOISSY-CRAMAYEL (FR)
(74) Mandataire: Brevalex
(86) Numéro de dépôt international: PCT/FR2020/051538
(87) Numéro de publication internationale: WO 2021/048489

(56) Documents cités:
- EP-A2- 2 781 728
- WO-A2-2010/012900
- FR-A1- 3 014 011
- US-A1- 2009 019 857
- US-A1- 2016 312 657

## Description

### Domaine technique

L'invention se rapporte au domaine de la fabrication d'un panneau structural et/ou acoustique du type comprenant deux peaux et une structure alvéolaire enserrée entre ces peaux. En particulier, l'invention se rapporte au domaine aéronautique, et concerne plus spécifiquement des composants d'ensemble propulsif d'aéronef comprenant au moins un tel panneau.

### État de la technique antérieure

Un ensemble propulsif d'aéronef comprend plusieurs panneaux structuraux communément appelés « panneaux sandwiches », principalement formés par deux peaux et une structure alvéolaire enserrée entre ces peaux. De tels panneaux sont par exemple utilisés pour former tout ou partie d'une tuyère d'éjection ou d'une structure interne fixe de la nacelle de l'ensemble propulsif.

La structure alvéolaire du panneau est généralement constituée de cloisons transversales reliant les peaux et contribuant ainsi à la tenue structurale du panneau. Les cloisons transversales délimitent des alvéoles, c'est-à-dire des espaces dépourvus de matière, ce qui permet notamment de réduire la masse du panneau.

Un tel panneau peut en outre avoir une fonction acoustique afin d'atténuer le bruit généré par l'ensemble propulsif. La peau destinée à être orientée vers la source du bruit est à cet effet rendue perméable à l'air, typiquement à l'aide d'orifices traversant cette peau pour guider l'air au sein des alvéoles et absorber ainsi de l'énergie acoustique.

Le brasage est une technique conventionnelle pour fixer les uns aux autres les éléments constitutifs d'un tel panneau structural et/ou acoustique lors de sa fabrication. Cette technique consiste à chauffer à sa température de fusion un métal d'apport interposé entre les éléments à assembler. Le métal d'apport peut prendre la forme d'un feuillard, d'une poudre ou d'une pâte et est choisi de sorte que sa température de fusion soit inférieure à la température de fusion des éléments à assembler.

Pour améliorer la tenue structurale du panneau, celui-ci comprend généralement des brides de fermeture ayant une section en forme de U. Les brides de fermeture sont typiquement agencées sur le pourtour latéral de la structure alvéolaire, selon le principe illustré sur la figure 2 du document WO 2018/087502 A1. Par comparaison avec une bride de fermeture sous forme de barre pleine, la section en forme de U permet de réduire la masse du panneau.

Compte tenu de la géométrie d'une telle bride de fermeture, le pourtour latéral du panneau comprend un creux, ce qui peut compliquer son assemblage avec une autre structure.

Des panneaux structurels et/ou acoustiques selon l'état de la technique sont présentés dans les documents EP 2781728 A2, FR 3014011 A1, WO 2010/012900 A2, US 2009/019857 A1 et US 2016/312657 A1.

### Exposé de l'invention

L'invention vise à procurer un panneau structural et/ou acoustique permettant de simplifier l'assemblage de ce panneau avec une autre structure.

A cet effet, l'invention a pour objet un panneau structural et/ou acoustique pour ensemble propulsif d'aéronef, ce panneau comprenant une peau interne, une peau externe, une structure alvéolaire et au moins une bride de fermeture, cette bride de fermeture comprenant une base et deux branches latérales reliées à la base, chaque branche latérale comprenant une extrémité libre, les branches latérales et la base délimitant une cavité qui s'ouvre au niveau de l'extrémité libre des branches latérales, la structure alvéolaire et la bride de fermeture étant enserrées entre la peau interne et la peau externe, l'une des branches latérales de la bride de fermeture étant fixée à la peau interne, l'autre branche latérale de la bride de fermeture étant fixée à la peau externe. Selon l'invention, l'extrémité libre de chacune des branches latérales est en regard de la structure alvéolaire.

Dans ce qui suit, il est généralement fait référence à une seule bride de fermeture. Les caractéristiques décrites pour une bride de fermeture peuvent bien entendu s'appliquer à chacune des brides de fermeture du panneau lorsque celui-ci en comprend plusieurs.

La bride de fermeture du panneau de l'invention peut avoir une géométrie conventionnelle, par exemple une section ayant sensiblement une forme de U. Ainsi, dans un mode de réalisation, la base peut être sensiblement perpendiculaire à chacune des branches latérales. Dans un autre mode de réalisation, la base peut avoir une géométrie non plane, par exemple une section une forme de V pointant vers l'extérieur du panneau. L'invention se caractérise plus spécifiquement par la disposition de la bride de fermeture par rapport aux autres éléments du panneau puisque, contrairement aux panneaux conventionnels, les extrémités libres des branches latérales ne sont pas dirigées vers l'extérieur du panneau mais vers l'intérieur de celui-ci, c'est-à-dire vers la structure alvéolaire.

De cette façon, le pourtour latéral du panneau est formé par la base de la bride de fermeture.

Cela permet de faciliter l'assemblage du panneau avec d'autres structures.

Par exemple, lorsque la bride de fermeture a une base plane, le panneau peut être assemblé à un autre panneau similaire en soudant l'une à l'autre la base d'une bride de fermeture respective de chacun de ces panneaux.

De plus, selon l'invention, le panneau comprend un ou plusieurs renforts s'étendant dans ladite cavité de manière à maintenir les branches latérales de la bride de fermeture écartées l'une par rapport à l'autre.

De tels renforts permettent d'améliorer la fabrication du panneau, en particulier la fixation les uns aux autres de ses éléments constitutifs, notamment dans le cas où cette fixation est réalisée par brasage.

En effet, le brasage du panneau peut typiquement être réalisé par mise en pression gazeuse des éléments à assembler au sein d'un four sous vide. Cette technique conventionnelle permet de plaquer l'une des peaux contre les autres éléments, sous l'action d'un gaz qui se dilate lors de l'augmentation de la température dans le four.

L'une des peaux est ainsi plaquée contre la structure alvéolaire et contre l'une des branches latérales de la bride de fermeture, ce qui entraîne un plaquage de la structure alvéolaire et de cette bride de fermeture, via sa base, contre l'autre peau qui vient elle-même en appui sur une contre-forme.

La branche latérale située du côté de la peau en appui sur la contre-forme n'est pas plaquée en tant que telle sur cette peau sous l'action de cette pression gazeuse. Compte tenu de la dilatation thermique de la bride de fermeture lors du brasage, cette branche latérale est par conséquent susceptible de s'affaisser et de ne pas être correctement fixée à cette peau, ce qui peut fragiliser le panneau.

La cavité étant orientée vers l'intérieur du panneau, il n'est pas possible d'insérer dans celle-ci un outillage conventionnel pour maintenir les branches latérales de la bride de fermeture écartées l'une par rapport à l'autre afin d'éviter un tel affaissement.

Le ou les renforts du panneau de l'invention permettent de réaliser cette fonction de maintien.

Ce qui vient d'être décrit s'applique aussi lorsque le plaquage des éléments à assembler est obtenu par application d'une pression mécanique résultant par exemple d'une dilatation thermique différentielle d'éléments d'outillage. Autrement dit, l'invention est compatible avec différentes techniques de fixation les uns aux autres des éléments constitutifs du panneau.

Dans une certaine mesure, les renforts peuvent aussi améliorer la tenue structurale du panneau lors de son utilisation.

Des exemples non limitatifs de renforts sont décrits ci-après.

Dans un mode de réalisation, les renforts peuvent comprendre des parois transversales fixées aux branches latérales de la bride de fermeture et espacées les unes des autres selon une direction principale le long de laquelle s'étend la bride de fermeture.

Selon une première variante, les parois transversales peuvent s'étendre entre l'extrémité libre des branches latérales de la bride de fermeture et la base de cette bride de fermeture, perpendiculairement à ladite direction principale.

Selon une deuxième variante, les parois transversales peuvent s'étendre parallèlement à ladite direction principale de sorte que les parois transversales soient fixées aux extrémités libres des branches latérales de la bride de fermeture.

Ces variantes peuvent être combinées entre elles de sorte que le panneau comprenne à la fois des parois transversales perpendiculaires à la direction principale et des parois transversales parallèles à la direction principale.

La distance entre deux parois transversales peut être comprise entre 10 mm et 30 mm, et de préférence être environ égale à 20 mm.

Ces valeurs d'espacement sont données à titre d'exemple non limitatif et peuvent en l'occurrence convenir à un panneau pour tuyère d'éjection de dimension standard.

Dans un mode de réalisation, les renforts peuvent comprendre des clinquants comprenant chacun une base et deux branches latérales reliées à la base, chaque branche latérale de chaque clinquant comprenant une extrémité libre en regard de la base de la bride de fermeture, la base de chaque clinquant s'étendant entre les extrémités libres de la bride de fermeture.

De tels clinquants peuvent ainsi avoir une section en forme de U et être imbriqués dans la cavité de sorte que le U de ces clinquants soit orienté dans un sens opposé par rapport au sens dans lequel est orienté le U de la bride de fermeture.

Dans un autre mode de réalisation, le ou les renforts peuvent comprendre une ou plusieurs parties de ladite structure alvéolaire.

Pour ce faire, la structure alvéolaire peut être usinée en étages.

Dans un autre mode de réalisation, le ou les renforts peuvent comprendre une ou plusieurs autres structures alvéolaires, c'est-à-dire une ou plusieurs structures alvéolaires différentes de la structure alvéolaire fixée aux deux peaux.

Bien entendu, ces différents modes de réalisation peuvent être combinés entre eux de sorte qu'un ou plusieurs renforts soient constitués par une ou plusieurs desdites parois latérales et/ou qu'un ou plusieurs autres renforts soient constitués par un ou plusieurs desdits clinquants et/ou qu'un ou plusieurs autres renforts soient constitués par une ou plusieurs parties de la structure alvéolaire et/ou qu'un ou plusieurs autres renforts soient constitués par une ou plusieurs desdites autres structures alvéolaires.

De plus, de tels renforts peuvent être fixés à la bride de fermeture, par exemple par soudage ou brasage, avant fixation de cette bride aux autres éléments du panneau.

De préférence, les peaux interne et externe, la structure alvéolaire et la bride de fermeture peuvent comprendre du métal.

Le panneau peut avoir une forme globalement plane ou incurvée, ou présenter une géométrie relativement complexe en fonction de sa destination.

Dans un mode de réalisation, le panneau peut présenter un axe de symétrie autour duquel s'étendent les peaux interne et externe, la structure alvéolaire et la bride de fermeture.

Autrement dit, le panneau peut avoir une forme sensiblement annulaire.

De manière non limitative, l'invention a aussi pour objet un composant pour ensemble propulsif d'aéronef, ce composant pouvant être choisi parmi une liste incluant un cône d'éjection, une buse d'éjection, une structure interne fixe et une lèvre d'entrée d'air, ce composant comprenant un ou plusieurs panneaux tels que décrits ci-dessus.

L'invention a aussi pour objet un aéronef comprenant au moins un tel composant.

Plus généralement, l'invention a aussi pour objets une nacelle pour ensemble propulsif d'aéronef et/ou un ensemble propulsif pour aéronef et/ou un aéronef comprenant un ou plusieurs panneaux tels que décrits ci-dessus.

L'invention a aussi pour objet un procédé de fabrication d'un panneau tel que décrit ci-dessus, ce procédé comprenant une étape de disposition de la structure alvéolaire et de l'au moins une bride de fermeture entre la peau interne et la peau externe, et une étape de brasage de la structure alvéolaire et de l'au moins une bride de fermeture avec la peau interne et la peau externe.

Dans un mode de réalisation, ce procédé peut comprendre une étape de disposition d'un ou plusieurs des renforts décrits ci-dessus dans la cavité de l'au moins une bride de fermeture avant mise en œuvre de ladite étape de brasage.

Bien entendu, le ou les renforts peuvent être disposés dans la cavité d'une bride de fermeture avant positionnement de cette bride de fermeture entre les peaux interne et externe du panneau.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un ensemble propulsif d'aéronef ;
[Fig. 2] est une vue schématique en perspective d'une nacelle pour ensemble propulsif d'aéronef ;
[Fig. 3] est une vue schématique en perspective et en coupe axiale d'une tuyère d'éjection pour ensemble propulsif d'aéronef ;
[Fig. 4] est une vue schématique en perspective d'une structure interne fixe pour ensemble propulsif d'aéronef ;
[Fig. 5] est une vue schématique en perspective d'une partie centrale d'un panneau conforme à l'invention ;
[Fig. 6] est une vue schématique en perspective et en coupe axiale d'une partie d'extrémité d'un panneau conforme à l'invention ;
[Fig. 7] est une vue schématique en perspective et en éclaté d'un panneau conforme à l'invention, avant fixation les uns aux autres de ses éléments constitutifs, cette figure montrant des feuilles de brasure interposées entre lesdits éléments constitutifs ;
[Fig. 8] est une vue schématique en coupe axiale d'un outillage de brasage recevant un panneau conforme à l'invention ;
[Fig. 9] est une vue schématique partielle en perspective d'une bride de fermeture et de renforts pour un panneau conforme à un premier mode de réalisation de l'invention ;
[Fig. 10] est une vue schématique partielle en coupe axiale d'un panneau conforme au premier mode de réalisation de l'invention ;
[Fig. 11] est une vue schématique partielle en perspective d'une bride de fermeture et de renforts pour un panneau conforme à un deuxième mode de réalisation de l'invention ;
[Fig. 12] est une vue schématique partielle en coupe axiale d'un panneau conforme au deuxième mode de réalisation de l'invention ;
[Fig. 13] est une vue schématique partielle en perspective d'une bride de fermeture et de renforts pour un panneau conforme à un troisième mode de réalisation de l'invention ;
[Fig. 14] est une vue schématique partielle en coupe axiale d'un panneau conforme au troisième mode de réalisation de l'invention ;
[Fig. 15] est une vue schématique partielle d'un renfort pour un panneau conforme au deuxième ou au troisième mode de réalisation de l'invention, ce renfort comprenant un premier type d'ouvertures ;
[Fig. 16] est une vue schématique partielle d'un renfort pour un panneau conforme au deuxième ou au troisième mode de réalisation de l'invention, ce renfort comprenant un deuxième type d'ouvertures ;
[Fig. 17] est une vue schématique partielle en perspective d'une bride de fermeture et de renforts pour un panneau conforme à un quatrième mode de réalisation de l'invention ;
[Fig. 18] est une vue schématique partielle en coupe axiale d'un panneau conforme au quatrième mode de réalisation de l'invention ;
[Fig. 19] est une vue schématique partielle d'un renfort pour un panneau conforme au quatrième mode de réalisation de l'invention ;
[Fig. 20] est une vue schématique partielle en perspective d'une bride de fermeture et de renforts pour un panneau conforme à un cinquième mode de réalisation de l'invention ;
[Fig. 21] est une vue schématique partielle en coupe axiale d'un panneau conforme au cinquième mode de réalisation de l'invention ;
[Fig. 22] est une vue schématique partielle en perspective d'une bride de fermeture et de renforts pour un panneau conforme à un sixième mode de réalisation de l'invention ;
[Fig. 23] est une vue schématique partielle en coupe axiale d'un panneau conforme au sixième mode de réalisation de l'invention ;
[Fig. 24] est une vue schématique partielle en perspective d'une bride de fermeture et de renforts pour un panneau conforme à un septième mode de réalisation de l'invention ;
[Fig. 25] est une vue schématique partielle en coupe axiale d'un panneau conforme au septième mode de réalisation de l'invention.

### Description détaillée de modes de réalisation

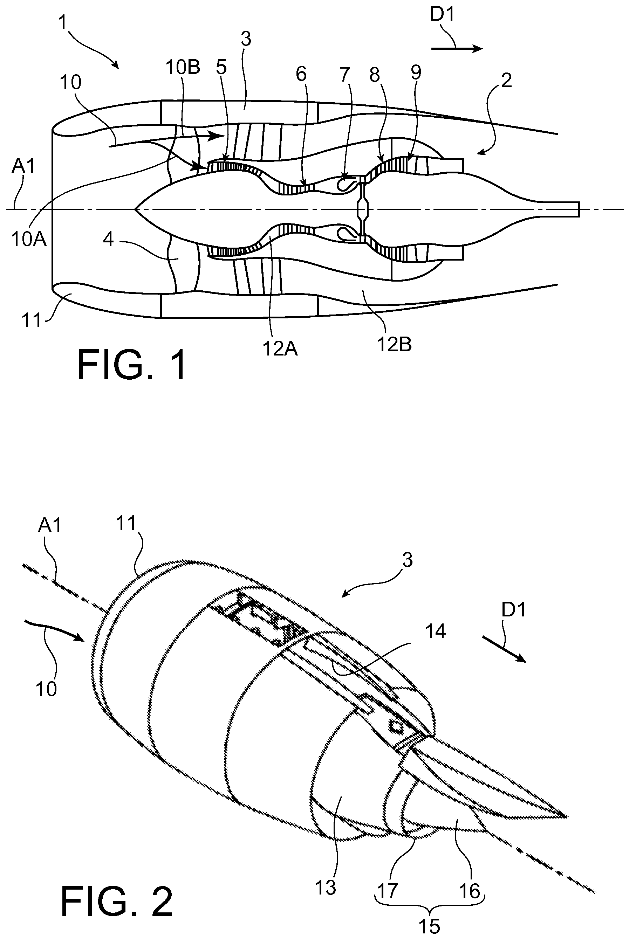

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont », « aval », « avant » et « arrière » sont définis par rapport à un sens D1 d'écoulement des gaz à travers l'ensemble propulsif 1 lorsque celui-ci est propulsé.

Le turboréacteur 2 présente un axe central longitudinal A1 autour duquel s'étendent ses différents composants, en l'occurrence, de l'amont vers l'aval du turboréacteur 2, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

De manière conventionnelle, lors du fonctionnement d'un tel turboréacteur 2, un écoulement d'air 10 pénètre dans l'ensemble propulsif 1 par une entrée d'air 11 en amont de la nacelle 3, traverse la soufflante 4 puis se divise en un flux primaire 10A central et un flux secondaire 10B. Le flux primaire 10A s'écoule dans une veine primaire 12A de circulation des gaz traversant le générateur de gaz. Le flux secondaire 10B s'écoule quant à lui dans une veine secondaire 11B entourant le générateur de gaz et délimitée radialement vers l'extérieur par la nacelle 3.

La figure 2 montre isolément et de manière plus détaillée la nacelle 3 d'un tel ensemble propulsif 1.

Il est notamment représenté sur cette figure une structure interne fixe 13 (« inner fixed structure » en anglais) entourant le turboréacteur 2 et délimitant radialement vers l'intérieur une partie aval de la veine secondaire 11B, ainsi qu'une structure externe fixe 14 (« outer fixed structure » en anglais) délimitant cette partie aval de la veine secondaire 11B radialement vers l'extérieur.

La figure 2 montre aussi une tuyère d'éjection 15 comprenant un cône d'éjection 16 (« plug » en anglais) et une buse d'éjection 17 (« nozzle » en anglais). La tuyère d'éjection 15 est configurée pour évacuer vers l'aval de l'ensemble propulsif 1 le flux primaire 10A sortant de la veine primaire 12A du turboréacteur 2 de manière à générer une poussée.

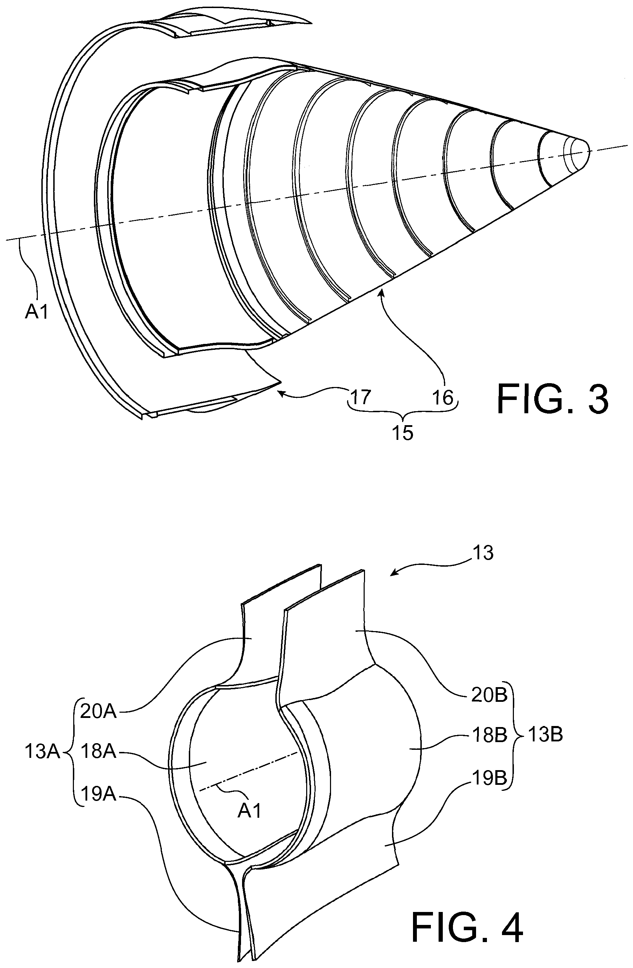

Les figures 3 et 4 montrent respectivement la tuyère d'éjection 15 et la structure interne fixe 13 de cette nacelle 3.

En référence à la figure 3, le cône d'éjection 16 et la buse d'éjection 17 sont tous deux des pièces de révolution d'axe A1, le cône d'éjection 16 étant sensiblement conique, la buse d'éjection 17 étant sensiblement annulaire.

En référence à la figure 4, la structure interne fixe 13 est réalisée en deux parties 13A et 13B symétriques l'une par rapport à l'autre par rapport à un plan longitudinal médian vertical passant par l'axe central longitudinal A1. La partie 13A comprend une pièce centrale 18A semi-annulaire formant un demi-tonneau ainsi que deux pièces d'extrémités 19A et 20A formant des îlots respectivement positionnés verticalement au-dessous et au-dessus de la pièce centrale 18A et permettant de relier la partie 13A de la structure interne fixe 13 à la structure externe fixe 14. La pièce 13B comprend une pièce centrale 18B et des îlots 19B et 20B similaires à ceux de la pièce 13A.

La structure interne fixe 13 et la tuyère d'éjection 15, ainsi que d'autres composants de la nacelle 3 comprennent généralement des panneaux structuraux et/ou acoustiques qui peuvent constituer tout ou partie de tels composants.

L'invention se rapporte plus spécifiquement à la structure et à la fabrication d'un tel panneau.

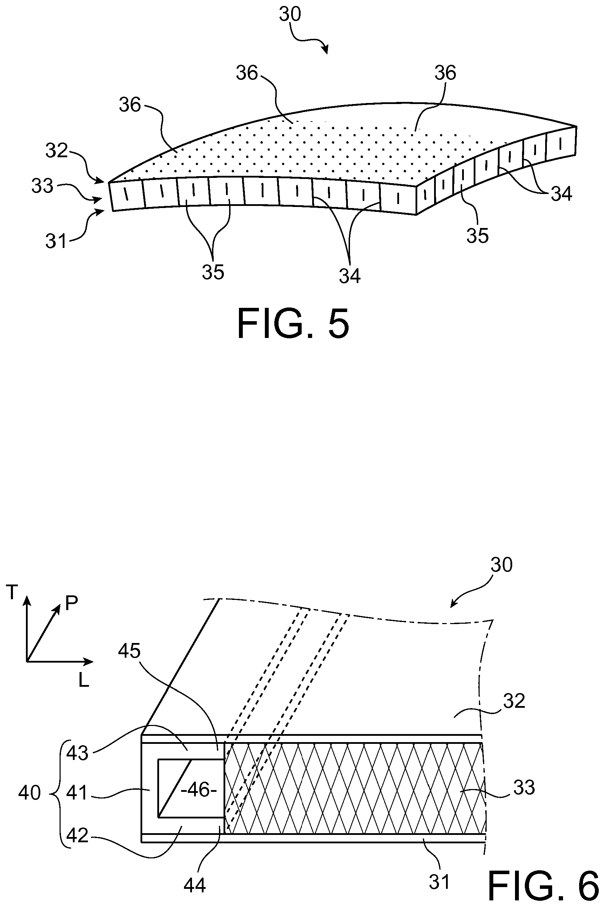

La figure 5 montre une partie centrale d'un panneau 30 conforme à l'invention. Ce panneau 30 comprend une peau interne 31, une peau externe 32 et une structure alvéolaire 33 enserrée entre les peaux interne 31 et externe 32.

A titre d'exemple non limitatif, les peaux interne 31 et externe 32 ont chacune une épaisseur comprise entre 0,2 mm et 2 mm, par exemple 0,6 mm, et la structure alvéolaire 33 a une épaisseur d'une dizaine de mm.

La peau interne 31, la peau externe 32 et la structure alvéolaire 33 comprennent dans cet exemple du métal tel que du titane.

Dans cet exemple, la structure alvéolaire 33 comprend des cloisons transversales 34 délimitant entre elles des alvéoles 35 hexagonales formant une structure en nid d'abeilles. Les alvéoles 35 peuvent avoir toute autre forme permettant d'éviter le télégraphing.

Dans cet exemple, la peau interne 31 est une peau pleine, structurante, tandis que la peau externe 32 comprend des orifices 36 destinés à guider de l'air dans les alvéoles 35 afin d'absorber de l'énergie acoustique.

Le panneau 30 de la figure 5 est donc un panneau acoustique.

La figure 6 montre une partie périphérique d'un panneau 30 conforme à l'invention dont la partie centrale peut correspondre à celle décrite ci-dessus en référence à la figure 5. Sur cette figure 6, il n'est pas représenté de cloisons transversales 34 de la structure alvéolaire 33 mais cette dernière peut bien entendu être du même type que la structure alvéolaire 33 de la figure 5.

Il est plus spécifiquement représenté sur la figure 6 une partie d'une bride de fermeture 40 (« close-out » en anglais) agencée conformément à l'invention.

Cette bride de fermeture 40 comprend une base 41 et deux branches latérales 42 et 43 conférant à la bride 40 une section en forme de U.

Plus précisément, la base 41 s'étend d'une part dans le sens de l'épaisseur du panneau 30, selon une direction transversale T, et selon une direction dite principale P qui peut être une direction circonférentielle du panneau 30 lorsque celui-ci est de type annulaire.

Les branches latérales 42 et 43 s'étendent chacune selon une direction dite longitudinale L qui peut être parallèle à l'axe central longitudinal A1 lorsque le panneau 30 est monté dans l'ensemble propulsif 1. Les branches latérales 42 et 43 sont chacune reliées à la base 41 de manière à former un angle sensiblement droit avec la base 41.

La base 41, la branche latérale 42 et la branche latérale 43 ont dans cet exemple une épaisseur d'environ 1,5 mm.

Les branches latérales 42 et 43 comprennent chacune une extrémité libre 44 et 45, respectivement.

Les branches latérales 42 et 43 et la base 41 délimitent une cavité 46 qui s'étend le long de la direction principale P et qui, dans la direction longitudinale L, s'ouvre au niveau des extrémités libres 44 et 45. L'ouverture de cette cavité 46 est considérée relativement à la bride de fermeture 40 indépendamment des autres éléments du panneau 30.

La bride de fermeture 40 a une épaisseur totale qui correspond à l'épaisseur de la structure alvéolaire 33 et est positionnée contre celle-ci de sorte que l'extrémité libre 44/45 de chacune des branches latérales 42/43 soit en regard de la structure alvéolaire 33.

Ainsi, la cavité 46 est dans cet exemple délimitée transversalement par les branches latérales 42 et 43, et longitudinalement d'une part par la base 41 et d'autre part par la structure alvéolaire 33.

La bride de fermeture 40 est en outre enserrée entre les peaux 31 et 32 et fixées à celles-ci de la même manière que la structure alvéolaire 33 (voir plus loin ci-dessous). La branche latérale 42 est fixée à la peau interne 31 et la branche latérale 43 est fixée à la peau externe 32.

De cette manière, la bride de fermeture 40 est agencée en une extrémité du panneau 30 de sorte que la base 41 de cette bride 40 définisse un pourtour latéral plein du panneau 30, ce qui facilite l'assemblage du panneau 30 avec une autre structure (non représentée), par exemple par soudage de la base 41 à une partie de cette autre structure.

Bien entendu, un espace peut être laissé entre les extrémités libres 44 et 45 de la bride de fermeture 40 et la structure alvéolaire 33, selon la direction longitudinale L. De plus, une partie de la structure alvéolaire 33 peut pénétrer dans la cavité 46 de manière à obturer tout ou partie de cette cavité 46 (voir plus loin ci-dessous).

Le panneau 30 peut avoir toute forme, par exemple une forme sensiblement conique ou annulaire, ou un secteur de forme sensiblement conique ou annulaire, pour former respectivement tout ou partie du cône d'éjection 16 ou de la buse d'éjection 17 de la figure 3, ou encore une forme en demi-tonneau pour former tout ou partie de la pièce centrale 18A ou 18B de la partie 13A ou 13B respectivement de la structure interne fixe 13 de la figure 4, ou encore une forme sensiblement plane ou présentant toute autre géométrie permettant de constituer une partie de l'ensemble propulsif 1.

De plus, le panneau 30 peut comprendre plusieurs brides de fermeture 40. Par exemple, lorsque le panneau 30 est annulaire, deux brides de fermeture 40 annulaires peuvent être utilisées pour fermer les deux extrémités annulaires du panneau 30. Lorsque le panneau 30 n'est pas une pièce de révolution, quatre brides de fermeture 40 peuvent être utilisées pour fermer les quatre extrémités latérales du panneau 30.

Selon l'invention, la fabrication du panneau 30 comprend un brasage de ses éléments constitutifs, de préférence par interposition de feuilles de brasure entre les éléments respectifs à assembler.

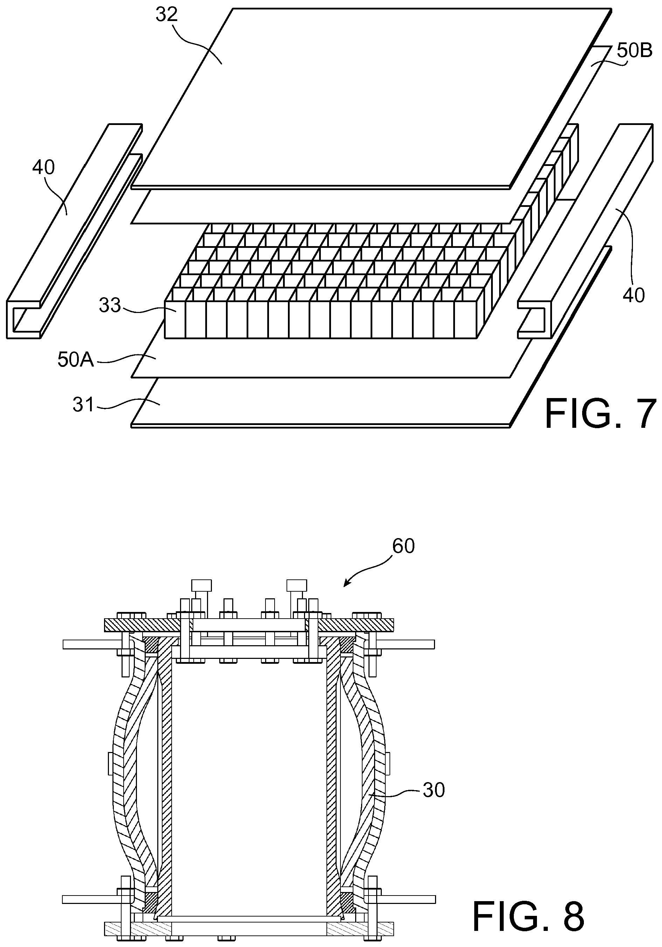

En référence à l'illustration de la figure 7 dans laquelle le panneau 30 comprend deux brides de fermeture 40 à assembler, une feuille de brasure 50A est disposée entre la peau interne 31 d'une part, et d'autre part une face intérieure de la structure alvéolaire 33 et l'une des branches latérales de chacune des brides de fermeture 40. Une autre feuille de brasure 50B est disposée entre la peau externe 32 d'une part, et d'autre part une face extérieure de la structure alvéolaire 33 et l'autre branche latérale de chacune des brides de fermeture 40.

De manière conventionnelle, les éléments du panneau 30 à assembler sont dans cet exemple placés dans un outillage de brasage 60 permettant de mettre ceux-ci sous pression gazeuse au sein d'un four sous vide (non représenté).

La figure 8 montre un outillage de brasage 60 conventionnel adapté pour braser un panneau 30 destiné à former une partie du cône d'éjection 16 de la figure 3. La mise en œuvre d'un tel outillage est par exemple décrite dans le document WO 2014/020286 A1.

Pour éviter notamment l'affaissement de l'une des branches latérales 42 et 43 de la bride de fermeture 40 lors du brasage, des renforts sont placés dans la cavité 46 de cette bride de fermeture 40 de manière à maintenir ces branches latérales 42 et 43 écartées l'une par rapport à l'autre.

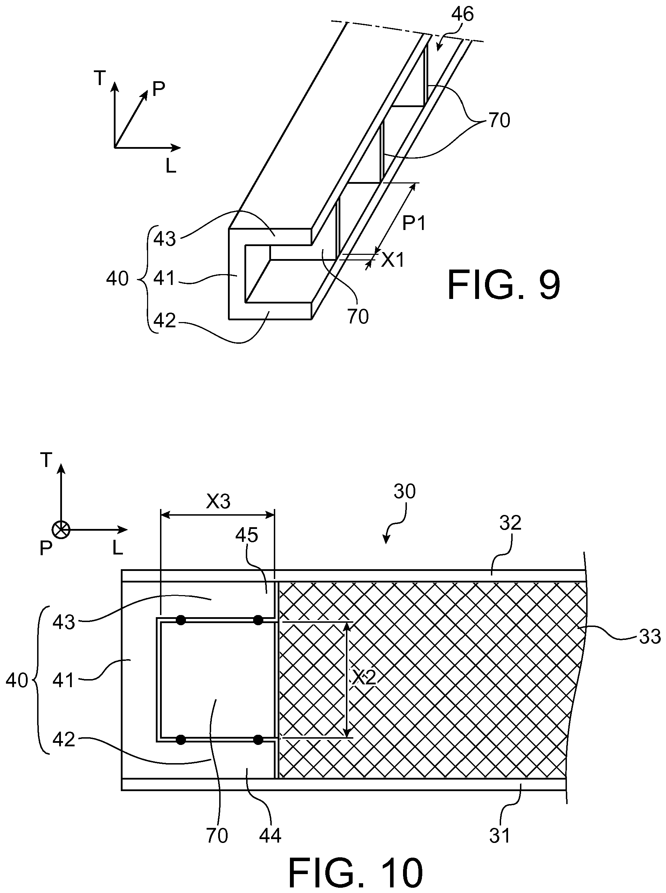

Différents types de renforts 70 sont décrits ci-après en référence aux figures 9 à 23.

Les figures 9 et 10 montrent un premier mode de réalisation, dans lequel des renforts 70 sont réalisés sous forme de parois transversales s'étendant chacune perpendiculairement par rapport à la direction principale P.

Dans cet exemple, chaque paroi transversale 70 a une épaisseur X1 d'environ 1 mm et deux parois transversales 70 consécutives sont espacées l'une de l'autre, selon la direction principale P, d'une distance P1 d'environ 20 mm.

Chaque paroi transversale 70 présente par ailleurs une dimension X2 selon la direction transversale T de manière à s'étendre dans la cavité 46 sensiblement depuis la branche latérale 42 jusqu'à la branche latérale 43 de la bride de fermeture 40.

Chaque paroi transversale 70 présente aussi une dimension X3 selon la direction longitudinale L de manière à s'étendre dans la cavité 46 sensiblement depuis la base 41 jusqu'aux extrémités libres 44 et 45 des branches latérales 42 et 43 de la bride de fermeture 40.

Dans cet exemple, chaque paroi transversale 70 affleure la surface des branches latérales 42 et 43 en vis-à-vis de la structure alvéolaire 33.

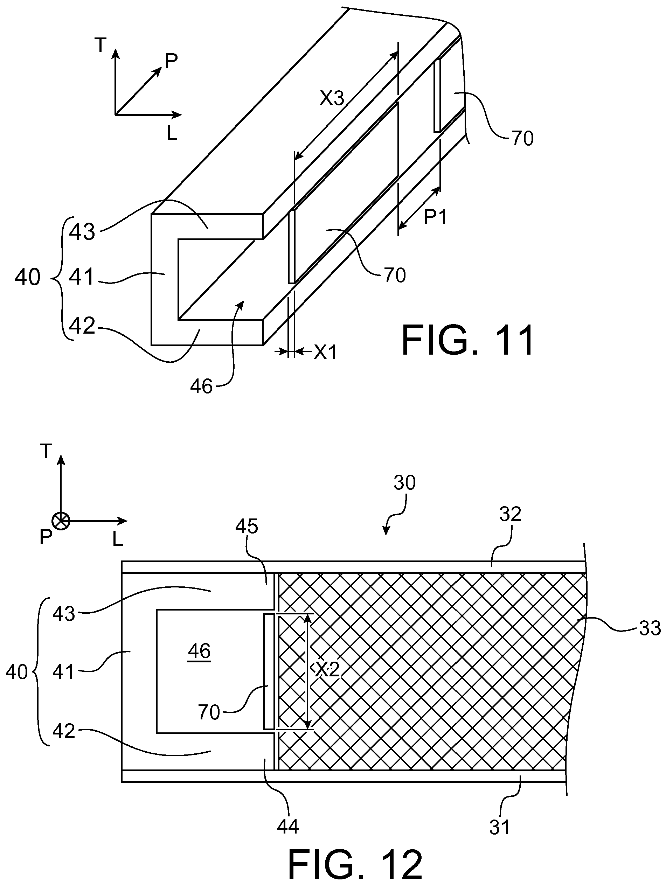

Les figures 11 et 12 montrent un deuxième mode de réalisation, dans lequel des renforts 70 sont réalisés sous forme de parois transversales s'étendant chacune parallèlement à la direction principale P.

Dans ce deuxième mode de réalisation, chacune des parois transversales 70 a une épaisseur X1 d'environ 1 mm, et une dimension X2 selon la direction transversale T de manière à s'étendre dans la cavité 46 sensiblement depuis la branche latérale 42 jusqu'à la branche latérale 43 de la bride de fermeture 40.

Plus précisément, chacune des parois transversales 70 est dans cet exemple positionnée au niveau des extrémités libres 44 et 45 des branches latérales 42 et 43 de manière à affleurer la surface de ces branches latérales 42 et 43 en vis-à-vis de la structure alvéolaire 33.

Chacune des parois transversales 70 a dans cet exemple une dimension X3 selon la direction principale P d'environ 60 mm, et deux parois transversales 70 consécutives selon cette direction sont espacées l'une de l'autre d'une distance P1 d'environ 20 mm.

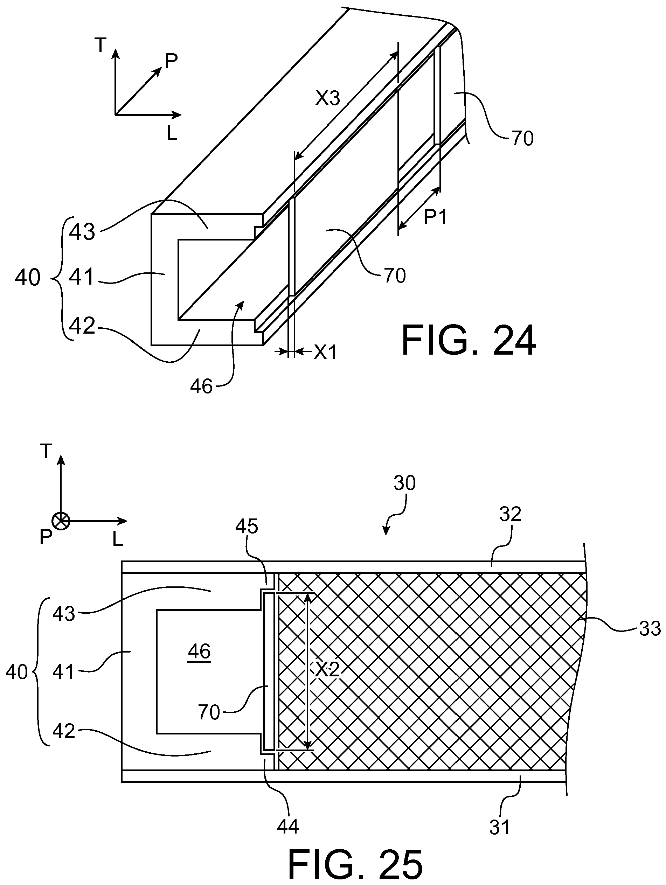

Il est représenté sur les figures 24 et 25 une variante de ce deuxième mode de réalisation permettant de faciliter la mise en place des parois transversales 70.

Cette variante se distingue du deuxième mode de réalisation en ce que chacune des branches latérales 42 et 43 comprend, au niveau de son extrémité libre 44 ou 45, une rainure s'étendant selon la direction principale P. Elle s'en distingue aussi en ce que la dimension X2 des parois transversales 70 est supérieure à l'écart entre les branches latérales 42 et 43 selon la direction transversale T, de sorte que les extrémités des parois transversales 70, selon la direction transversale T, soient logées dans les rainures des branches latérales 42 et 43. Ainsi, chacune des extrémités transversales des parois transversales 70 est située longitudinalement entre la branche latérale 42 ou 43 et la structure alvéolaire 33 tout en s'étendant selon la direction transversale T entre des épaulements des branches latérales 42 et 43, ces épaulements étant formés par les rainures décrites ci-dessus.

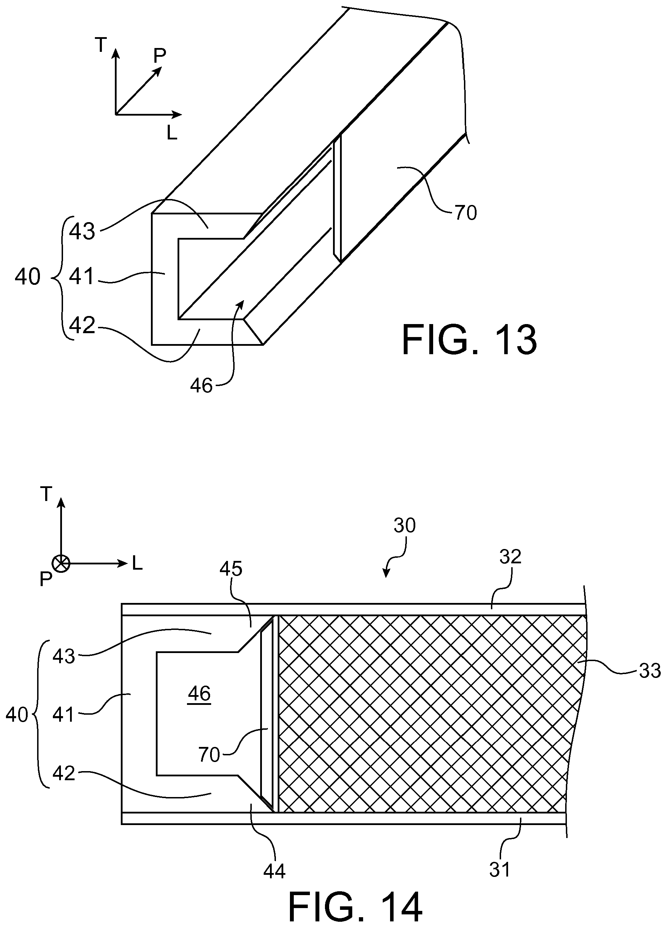

Les figures 13 et 14 montrent un troisième mode de réalisation qui se distingue du deuxième mode de réalisation en ce que les extrémités libres 44 et 45 des branches latérales 42 et 43 comprennent en chanfrein, et les extrémités des parois transversales 70, selon la direction transversale T, comprennent chacune un chanfrein correspondant permettant de caler ces parois 70 sur les branches latérales 42 et 43.

Dans chacun des modes de réalisation décrits ci-dessus, il est préférable de fixer les parois transversales 70 sur la bride de fermeture 40, par exemple par soudage ou brasage, compte tenu notamment de l'épaisseur X1 de ces parois 70, afin de les maintenir en position au moins pendant le brasage du panneau 30.

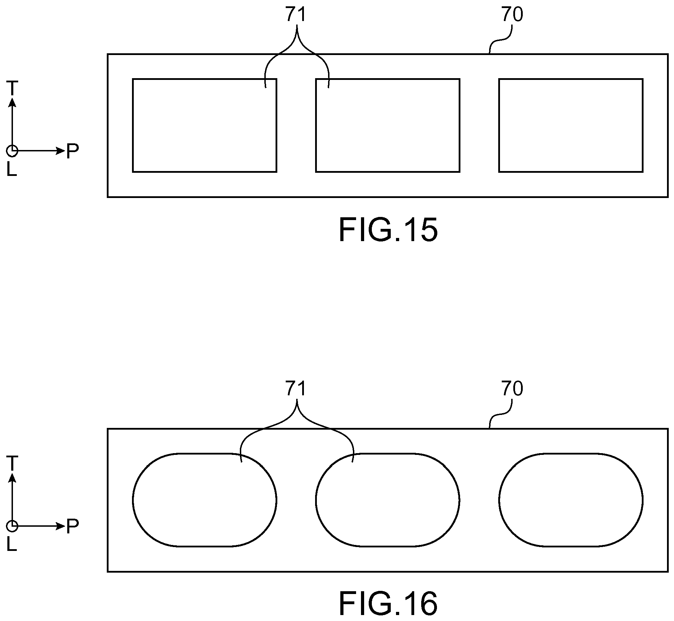

De nombreuses variantes peuvent être apportées à ces modes de réalisation sans sortir du cadre de l'invention. Par exemple, les parois transversales 70 des deuxième et troisième modes de réalisation, et du mode de réalisation des figures 24 et 25, peuvent comprendre des ouvertures 71 telles qu'illustrées sur les figures 15 et 16, afin de réduire la masse du panneau 30.

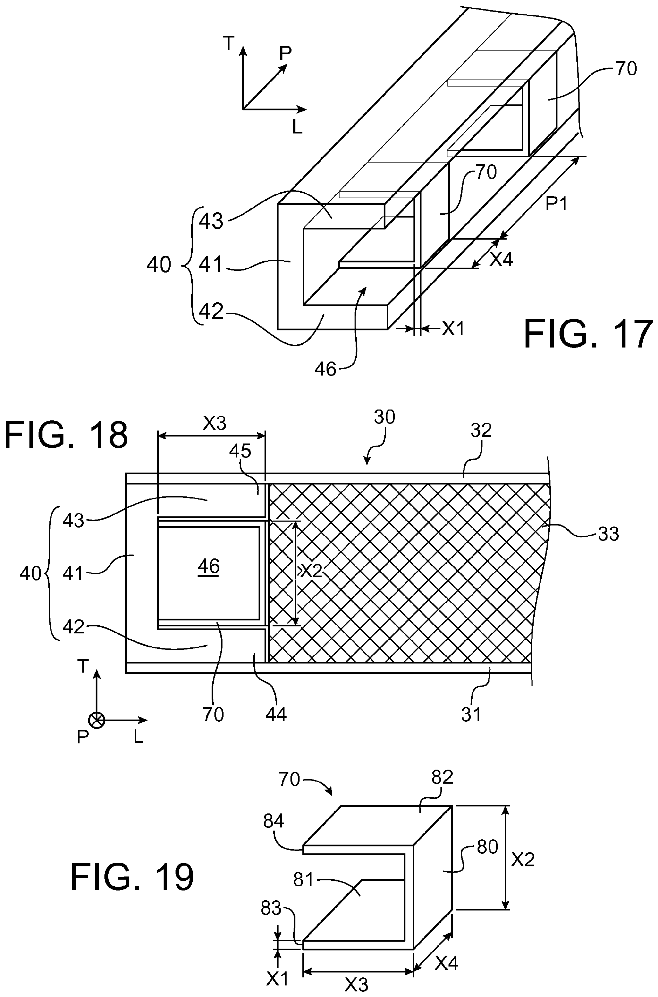

Les figures 17 et 18 montrent un quatrième mode de réalisation, dans lequel des renforts 70 sont des clinquants ayant une section en forme de U.

Un tel clinquant 70 est représenté isolément à la figure 19. Ce clinquant 70 comprend une base 80 et deux branches latérales 81 et 82 reliées à la base 80. Chacune des branches latérales 81 et 82 comprend une extrémité libre 83 et 84 respectivement.

En référence aux figures 17 et 18, pour chaque clinquant 70, l'extrémité libre 83 et 84 de chacune des branches latérales 81 et 82 est en regard de la base 41 de la bride de fermeture 40, et la base 80 du clinquant 70 s'étend entre les extrémités libres 44 et 45 de la bride de fermeture 40 de manière à affleurer la surface de ces extrémités libres 44 et 45 en vis-à-vis de la structure alvéolaire 33.

Dans ce quatrième mode de réalisation, chaque partie des clinquants 70, c'est-à-dire la base 80 et les branches latérales 81 et 82, a une épaisseur X1 d'environ 1 mm.

La base 80 a une dimension X2 selon la direction transversale T de manière à s'étendre dans la cavité 46 sensiblement depuis la branche latérale 42 jusqu'à la branche latérale 43 de la bride de fermeture 40.

Les branches latérales 81 et 82 ont chacune une dimension X3 selon la direction longitudinale L de manière à s'étendre chacune dans la cavité 46 sensiblement depuis les extrémités libres 44 et 45 de la bride de fermeture 40 jusqu'à la base 41 de cette bride 40.

Chacun des clinquants 70 a dans cet exemple une dimension X4 selon la direction principale P d'environ 8 mm, et deux clinquants 70 consécutifs selon cette direction sont espacés l'un de l'autre d'une distance P1 d'environ 20 mm.

Les clinquants 70 peuvent être dimensionnés pour être maintenus en position par effet ressort grâce à leur forme en U. Alternativement, les clinquants 70 peuvent être fixés à la bride de fermeture 40, par exemple par soudage ou brasage.

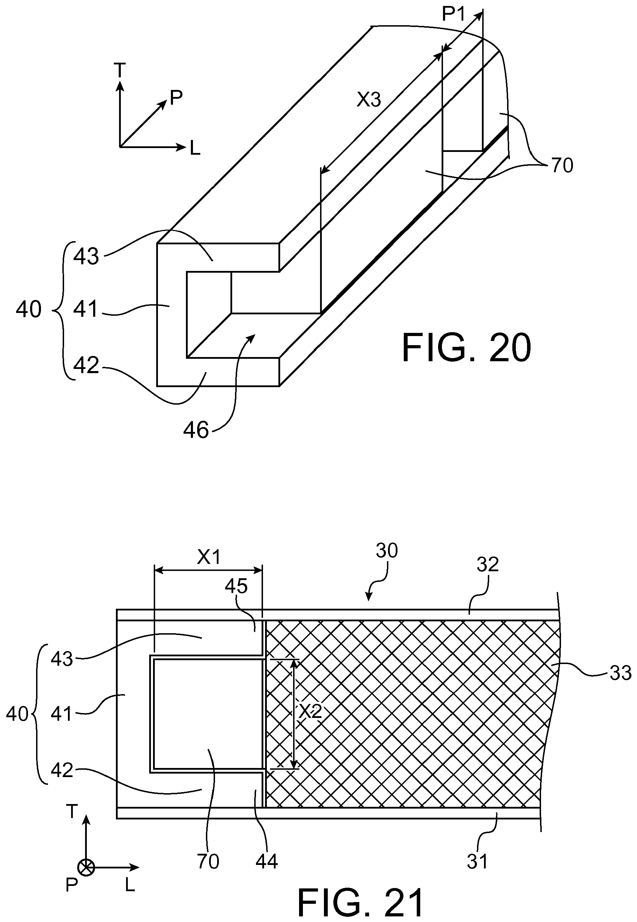

Les figures 20 et 21 montrent un cinquième mode de réalisation, dans lequel les renforts 70 sont formés par des blocs s'étendant selon la direction principale et ayant une section sensiblement similaire à celle de la cavité 46, c'est-à-dire une section sensiblement carrée.

Dans cet exemple, les blocs 70 sont constitués d'une structure alvéolaire, par exemple du même type que la structure alvéolaire 33. Les alvéoles (non représentées) des blocs 70 réduisent leur masse.

Dans ce cinquième mode de réalisation, chacun des blocs 70 a une dimension X1 selon la direction longitudinale L de manière à s'étendre dans la cavité 46 sensiblement depuis la base 41 jusqu'aux extrémités libres 44 et 45 de la bride de fermeture 40, c'est-à-dire en l'occurrence jusqu'à la structure alvéolaire 33 de manière à affleurer la surface des branches latérales 42 et 43 en vis-à-vis de la structure alvéolaire 33.

Chacun de ces blocs 70 a une dimension X2 selon la direction transversale T de manière à s'étendre dans la cavité 46 sensiblement depuis la branche latérale 42 jusqu'à la branche latérale 43 de la bride de fermeture 40.

Enfin, chacun de ces blocs 70 a dans cet exemple une dimension X3 selon la direction principale P d'environ 60 mm, deux blocs 70 consécutifs selon cette direction étant espacés l'un de l'autre d'une distance P1 d'environ 20 mm.

Pour chacun des modes de réalisation décrits ci-dessus, chaque renfort 70 peut être fixé de manière permanente à la bride de fermeture 40, par exemple par soudage ou brasage. Dans ce cas, les renforts 70 contribuent dans une certaine mesure à la tenue structurale du panneau 30 lors de son utilisation.

Alternativement, lorsque la bride de fermeture 40 n'est pas annulaire et que la cavité 46 reste, après fabrication du panneau 30, ouverte au moins en une extrémité selon la direction principale P, les renforts 70 peuvent être retirés afin de réduire la masse du panneau 30.

La technique de retrait des renforts 70 après fabrication du panneau 30 dépend du type de liaison entre les renforts 70 et la bride de fermeture 40.

Lorsque les renforts 70 ont été soudés ou brasés, leur retrait nécessite de casser les points de soudure correspondant. Bien entendu, leur fixation à la bride de fermeture 40 doit dans ce cas être suffisamment faible pour permettre une telle cassure tout en étant suffisamment forte pour rester en position pendant le brasage des éléments constitutifs du panneau 30.

Le maintien des renforts 70 dans la cavité 46 pendant la fabrication du panneau 30 peut aussi être réalisé par dilatation thermique des renforts 70, lesquels sont alors dimensionnés ajustés avec un serrage permettant, à température ambiante, de les insérer dans la cavité 46 et de les en retirer après fabrication du panneau 30.

Quel que soit le type de liaison entre renforts 70 et bride de fermeture 40, il est préférable d'utiliser un anti-diffuseur pour éviter que les renforts 70 se soudent à la bride de fermeture 40 et à la structure alvéolaire 33, par diffusion, pendant le brasage du panneau 30.

De manière générale, les renforts 70 comprennent de préférence un matériau ayant un coefficient de dilatation identique ou supérieur à celui de la bride de fermeture 40, afin que les renforts 70 maintiennent les branches latérales 42 et 43 de la bride de fermeture 40 écartées l'une par rapport à l'autre pendant le brasage du panneau 30.

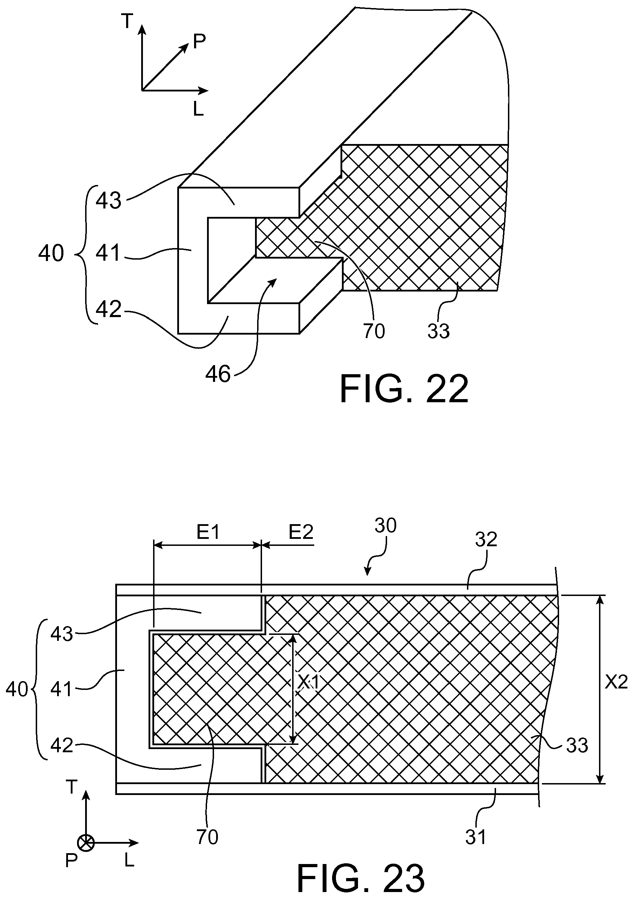

Les figures 22 et 23 montrent un sixième mode de réalisation, dans lequel un renfort 70 est constitué par une partie respective de la structure alvéolaire 33 du panneau 30.

Pour ce faire, la structure alvéolaire 33 est préalablement usinée de sorte que l'extrémité E1 de cette structure 33 logée dans la cavité 46 de la bride de fermeture 40 pour former le renfort 70 ait une dimension X1 selon la direction transversale T inférieure à l'épaisseur X2 de la structure alvéolaire 33 sur la partie centrale E2 de cette structure 33.

Les modes de réalisation décrits ci-dessus sont donnés à titre d'exemples non limitatifs. Notamment, dans la mesure où les renforts 70 assurent pendant le brasage du panneau 30 leur fonction de maintien de l'écartement des branches latérales 42 et 43, la forme, les dimensions ou encore le nombre de ces renforts 70 et leur positionnement les uns par rapport aux autres peuvent être différents de ce qui vient d'être décrit, sans sortie du cadre de l'invention.

## Revendications

1. Panneau structural et/ou acoustique (30) pour ensemble propulsif (1) d'aéronef, ce panneau (30) comprenant une peau interne (31), une peau externe (32), une structure alvéolaire (33) et au moins une bride de fermeture (40), cette bride de fermeture (40) comprenant une base (41) et deux branches latérales (42, 43) reliées à la base (41), chaque branche latérale (42, 43) comprenant une extrémité libre (44, 45), les branches latérales (42, 43) et la base (41) délimitant une cavité (46) qui s'ouvre au niveau de l'extrémité libre (44, 45) des branches latérales (42, 43), la structure alvéolaire (33) et la bride de fermeture (40) étant enserrées entre la peau interne (31) et la peau externe (32), l'une des branches latérales (42) de la bride de fermeture (40) étant fixée à la peau interne (31), l'autre branche latérale (43) de la bride de fermeture (40) étant fixée à la peau externe (32), l'extrémité libre (44, 45) de chacune des branches latérales (42, 43) étant en regard de la structure alvéolaire (33) de sorte que la structure alvéolaire (33) délimite ladite cavité (46), ledit panneau (30) étant **caractérisé en ce qu'**il comprend un ou plusieurs renforts (70) s'étendant dans ladite cavité (46) de manière à maintenir les branches latérales (42, 43) de la bride de fermeture (40) écartées l'une par rapport à l'autre, lesdits renforts (70) comprennent des parois transversales fixées aux branches latérales (42, 43) de la bride de fermeture (40) et espacées les unes des autres selon une direction principale (P) le long de laquelle s'étend la bride de fermeture (40).

2. Panneau (30) selon la revendication 1, dans lequel les parois transversales (70) s'étendent de préférence :
- entre l'extrémité libre (44, 45) des branches latérales (42, 43) de la bride de fermeture (40) et la base (41) de cette bride de fermeture (40), perpendiculairement à ladite direction principale (P), ou
- parallèlement à ladite direction principale (P) de sorte que les parois transversales (70) soient fixées aux extrémités libres (44, 45) des branches latérales (42, 43) de la bride de fermeture (40).

3. Panneau (30) selon la revendication 1 ou 2, dans lequel les renforts (70) comprennent des clinquants comprenant chacun une base (80) et deux branches latérales (81, 82) reliées à la base (80), chaque branche latérale (81, 82) de chaque clinquant (70) comprenant une extrémité libre (83, 84) en regard de la base (41) de la bride de fermeture (40), la base (80) de chaque clinquant (70) s'étendant entre les extrémités libres (44, 45) de la bride de fermeture (40).

4. Panneau (30) selon l'une quelconque des revendications 1 à 3, dans lequel le ou les renforts (70) comprennent une ou plusieurs parties (E1) de ladite structure alvéolaire (33) et/ou une ou plusieurs autres structures alvéolaires.

5. Panneau (30) selon l'une quelconque des revendications 1 à 4, dans lequel les peaux interne (31) et externe (32), la structure alvéolaire (33) et la bride de fermeture (40) comprennent du métal.

6. Panneau (30) selon l'une quelconque des revendications 1 à 5, ce panneau (30) présentant un axe de symétrie (A1) autour duquel s'étendent les peaux interne (31) et externe (32), la structure alvéolaire (33) et la bride de fermeture (40).

7. Composant pour ensemble propulsif (1) d'aéronef, ce composant étant choisi parmi une liste incluant un cône d'éjection (16), une buse d'éjection (17), une structure interne fixe (13) et une lèvre d'entrée d'air (11), ce composant comprenant un ou plusieurs panneaux (30) selon l'une quelconque des revendications 1 à 6.

8. Aéronef, comprenant au moins un composant selon la revendication 7.

9. Procédé de fabrication d'un panneau (30) selon l'une quelconque des revendications 1 à 6, ce procédé comprenant une étape de disposition de la structure alvéolaire (33) et de l'au moins une bride de fermeture (40) entre la peau interne (31) et la peau externe (32), et une étape de brasage de la structure alvéolaire (33) et de l'au moins une bride de fermeture (40) avec la peau interne (31) et la peau externe (32).

10. Procédé selon la revendication 9, pour fabriquer un panneau (30) selon l'une quelconque des revendications 1 à 4, ce procédé comprenant une étape de disposition d'un ou plusieurs desdits renforts (70) dans la cavité (46) de l'au moins une bride de fermeture (40) avant mise en œuvre de ladite étape de brasage.

## Patentansprüche

1. Strukturelle und/oder akustische Platte (30) für eine Luftfahrzeugantriebseinheit (1), wobei diese Platte (30) eine Innenhaut (31), eine Außenhaut (32), eine Wabenstruktur (33) und mindestens einen Verschlussflansch (40) umfasst, wobei dieser Verschlussflansch (40) eine Basis (41) und zwei mit der Basis (41) verbundene Seitenschenkel (42, 43) umfasst, wobei jeder Seitenschenkel (42, 43) ein freies Ende (44, 45) umfasst, wobei die Seitenschenkel (42, 43) und die Basis (41) einen Hohlraum (46) begrenzen, der sich an dem freien Ende (44, 45) der Seitenschenkel (42, 43) öffnet, wobei die Wabenstruktur (33) und der Verschlussflansch (40) zwischen der Innenhaut (31) und der Außenhaut (32) eingespannt sind, wobei einer der Seitenschenkel (42) des Verschlussflansches (40) an der Innenhaut (31) befestigt ist, wobei der andere Seitenschenkel (43) des Verschlussflansches (40) an der Außenhaut (32) befestigt ist, wobei das freie Ende (44, 45) jedes der Seitenschenkel (42, 43) gegenüber der Wabenstruktur (33) liegt, so dass die Wabenstruktur (33) den Hohlraum (46) begrenzt, wobei die Platte (30) **dadurch gekennzeichnet ist, dass** sie eine oder mehrere Verstärkungen (70) umfasst, die sich in dem Hohlraum (46) erstrecken, so dass die Seitenschenkel (42, 43) des Verschlussflansches (40) voneinander entfernt gehalten werden, wobei die Verstärkungen (70) Querwände umfassen, die an den Seitenschenkeln (42, 43) des Verschlussflansches (40) befestigt sind und in einer Hauptrichtung (P), entlang der sich der Verschlussflansch (40) erstreckt, voneinander beabstandet sind.

2. Platte (30) nach Anspruch 1, wobei sich die Querwände (70) vorzugsweise wie folgt erstrecken:
- zwischen dem freien Ende (44, 45) der Seitenschenkel (42, 43) des Verschlussflansches (40) und der Basis (41) des Verschlussflansches (40), senkrecht zu der Hauptrichtung (P), oder
- parallel zu der Hauptrichtung (P), so dass die Querwände (70) an den freien Enden (44, 45) der Seitenschenkel (42, 43) des Verschlussflansches (40) befestigt sind.

3. Platte (30) nach Anspruch 1 oder 2, wobei die Verstärkungen (70) Klinker umfassen, die jeweils eine Basis (80) und zwei mit der Basis (80) verbundene Seitenschenkel (81, 82) umfassen, wobei jeder Seitenschenkel (81, 82) jedes Klinkers (70) ein freies Ende (83, 84) umfasst, das der Basis (41) des Verschlussflansches (40) gegenüberliegt, wobei sich die Basis (80) jedes Klinkers (70) zwischen den freien Enden (44, 45) des Verschlussflansches (40) erstreckt.

4. Platte (30) nach einem der Ansprüche 1 bis 3, wobei die Verstärkung(en) (70) einen oder mehrere Teile (E1) der Wabenstruktur (33) und/oder eine oder mehrere andere Wabenstrukturen umfassen.

5. Platte (30) nach einem der Ansprüche 1 bis 4, wobei die Innenhaut (31), die Außenhaut (32), die Wabenstruktur (33) und der Verschlussflansch (40) Metall umfassen.

6. Platte (30) nach einem der Ansprüche 1 bis 5, wobei diese Platte (30) eine Symmetrieachse (A1) aufweist, um die sich die Innenhaut (31), die Außenhaut (32), die Wabenstruktur (33) und der Verschlussflansch (40) erstrecken.

7. Komponente für eine Luftfahrzeugantriebseinheit (1), wobei diese Komponente aus einer Liste ausgewählt ist, die einen Auswurfkegel (16), eine Auswurfdüse (17), eine feste Innenstruktur (13) und eine Lufteinlasslippe (11) umfasst, wobei diese Komponente eine oder mehrere Platten (30) nach einem der Ansprüche 1 bis 6 umfasst.

8. Luftfahrzeug, umfassend mindestens eine Komponente nach Anspruch 7.

9. Verfahren zur Herstellung einer Platte (30) nach einem der Ansprüche 1 bis 6, wobei dieses Verfahren einen Schritt umfasst, bei dem die Wabenstruktur (33) und der mindestens eine Verschlussflansch (40) zwischen der Innenhaut (31) und der Außenhaut (32) angeordnet werden, und einen Lötschritt der Wabenstruktur (33) und des mindestens einen Verschlussflansches (40) mit der Innenhaut (31) und der Außenhaut (32).

10. Verfahren nach Anspruch 9, um eine Platte (30) nach einem der Ansprüche 1 bis 4 herzustellen, wobei dieses Verfahren einen Schritt umfasst, bei dem eine oder mehrere der Verstärkungen (70) in dem Hohlraum (46) des mindestens einen Verschlussflansches (40) angeordnet sind, bevor der Lötschritt ausgeführt wird.

## Claims

1. Structural and/or acoustic panel (30) for an aircraft propulsion assembly (1), this panel (30) comprising an inner skin (31), an outer skin (32), an alveolar structure (33) and at least one sealing flange (40), this sealing flange (40) comprising a base (41) and two lateral arms (42, 43) connected to the base (41), each lateral arm (42, 43) comprising a free end (44, 45), the lateral arms (42, 43) and the base (41) delimiting a cavity (46) which opens at the free end (44, 45) of the lateral arms (42, 43), the alveolar structure (33) and the sealing flange (40) being enclosed between the inner skin (31) and the outer skin (32), one of the lateral arms (42) of the sealing flange (40) being fastened to the inner skin (31), the other lateral arm (43) of the sealing flange (40) being fastened to the outer skin (32), the free end (44, 45) of each of the lateral arms (42, 43) facing the alveolar structure (33) such that the alveolar structure (33) delimits said cavity (46), said panel (30) being **characterised in that** it comprises one or more reinforcements (70) extending into said cavity (46) so as to keep the lateral arms (42, 43) of the sealing flange (40) separated from one another, the reinforcements (70) comprise transverse walls fastened to the lateral arms (42, 43) of the sealing flange (40) and spaced apart along a principal direction (P) along which the sealing flange (40) extends.

2. Panel (30) according to claim 1, wherein said transverse walls (70) extending preferably:
- between the free end (44, 45) of the lateral arms (42, 43) of the sealing flange (40) and the base (41) of this sealing flange (40), perpendicularly to said principal direction (P), or
- parallel with said principal direction (P) such that the transverse walls (70) are fastened to the free ends (44, 45) of the lateral arms (42, 43) of the sealing flange (40).

3. Panel (30) according to claim 1 or 2, wherein the reinforcements (70) comprise foils each comprising a base (80) and two lateral arms (81, 82) connected to the base (80), each lateral arm (81, 82) of each foil (70) comprising a free end (83, 84) facing the base (41) of the sealing flange (40), the base (80) of each foil (70) extending between the free ends (44, 45) of the sealing flange (40).

4. Panel (30) according to any one of claims 1 to 3, wherein the reinforcement(s) (70) comprise one or more portions (E1) of said alveolar structure (33) and/or one or more other alveolar structures.

5. Panel (30) according to any one of claims 1 to 4, wherein the inner (31) and outer (32) skins, the alveolar structure (33) and the sealing flange (40) comprise metal.

6. Panel (30) according to any one of claims 1 to 5, this panel (30) having an axis of symmetry (A1) about which the inner (31) and outer (32) skins, the alveolar structure (33) and the sealing flange (40) extend.

7. Aircraft propulsion assembly (1) component, this component being selected from a list including an ejection plug (16), an ejection nozzle (17), an inner fixed structure (13) and an air inlet lip (11), this component comprising one or more panels (30) according to any one of claims 1 to 6.

8. Aircraft, comprising at least one component according to claim 7.

9. Method for manufacturing a panel (30) according to any one of claims 1 to 6, this method comprising a step of disposing the alveolar structure (33) and the at least one sealing flange (40) between the inner skin (31) and the outer skin (32), and a step of brazing the alveolar structure (33) and the at least one sealing flange (40) with the inner skin (31) and the outer skin (32).

10. Method according to claim 9, for manufacturing a panel (30) according to any one of claims 1 to 4, this method comprising a step of disposing one or more of said reinforcements (70) in the cavity (46) of the at least one sealing flange (40) before implementing said brazing step.
